# FASCICULE DE BREVET EUROPEEN

(11) **EP 4 474 221 B1**
(45) Date de publication et mention de la délivrance du brevet: **08.04.2026**
(21) Numéro de dépôt: 24172312.1
(22) Date de dépôt: 25.04.2024
(51) Int. Cl.: B60R 13/02

(54) **VÉHICULE COMPORTANT UNE GARNITURE À PROTECTION CONTRE L'ÉCOULEMENT DE LIQUIDE**
FAHRZEUG MIT EINER DICHTUNG ZUM SCHUTZ GEGEN DEN FLÜSSIGKEITSSTROM
VEHICLE WITH A LIQUID FLOW-PROTECTED TRIM

(30) Priorité: 08.06.2023 FR 2305809
(43) Date de publication de la demande: 11.12.2024
(73) Titulaire: Stellantis Auto SAS, 78300 Poissy (FR)
(72) Inventeur: DI BELLO, MARCO, 78990 ELANCOURT (FR); AZHAR, SAFIA, 20252 CASABLANCA (MA)
(74) Mandataire: BCIP

(56) Documents cités:
- JP-A- 2020 147 094

## Description

L'invention concerne un véhicule comportant une garniture de planche de bord protégeant des équipements électriques contre des écoulements de liquide.

Les véhicules automobiles comportent généralement une planche de bord sur laquelle sont installées divers boutons électriques de commande, ainsi que des prises d'alimentation pour pouvoir charger des équipements électroniques nomades, tels que des téléphones portables. Dans le cas de véhicule ouvert, tels que des véhicules cabriolet et/ou des véhicules sans porte, il est nécessaire de veiller à ce que l'eau pouvant s'écouler sur la planche de bord ne provoquent pas de court-circuit au niveau de ces boutons de commande ou prises électriques de recharge. Pour cela, le document JP2020147094 montre un véhicule selon le préambule de la revendication 1 et propose une solution évitant l'accumulation d'eau dans un boutons située sur la planche de bord en imposant un parcourt particulier à l'eau et installant des parois permettant de guider l'eau.

L'inconvénient d'une telle solution est que l'eau circule à proximité du bouton et aucun élément n'empêche l'eau de venir sur le bouton. De plus, les parois qui guident l'eau sont derrière la garniture de planche de bord, cachées, et ne peuvent être mises en façade de planche de bord pour dévier l'eau avant qu'elle n'arrive sur le bouton, car elles présentent des arêtes saillantes pouvant blessées en cas de choc.

L'objectif de l'invention est de remédier à ces inconvénients. En particulier, un des buts de l'invention est de proposer une solution évitant que de l'eau s'écoulant sur une planche de bord ne vienne sur un équipement électrique, telle qu'un bouton ou une prise de recharge, tout en assurant la sécurité des passagers.

Ce but est atteint selon l'invention, grâce à un véhicule comportant une garniture de planche de bord comportant une façade s'étendant principalement dans un plan parallèle à un axe transversal et vertical au véhicule, comprenant zone de fixation d'un équipement électrique, un nez de garniture surplombant ladite façade verticalement, la façade étant en retrait par rapport au nez de garniture suivant un axe longitudinal au véhicule, une paroi de liaison reliant le nez de garniture à la façade, remarquable en ce que la paroi de liaison comporte un segment amont s'étendant sur la largeur suivant l'axe transversale du véhicule de la zone de fixation, relié au nez de garniture, et formant un angle non nulle par rapport à un plan horizontal parallèle aux axes longitudinal et transversal du véhicule, orienté vers le haut du véhicule, de sorte que le bord du segment amont lié au nez de garniture est situé plus bas que le bord du premier segment opposé audit nez de garniture.

Ainsi avantageusement, si de l'eau coule sur la garniture, elle sera arrêtée au niveau de la jonction entre le nez de garniture et le segment de la paroi de liaison car, ledit segment étant orienté vers le haut depuis le nez de planche de bord, l'eau ne peut pas remontée le long du segment vers la façade, et donc ne peut pas venir couler sur la façade et les équipements électriques disposés sur ladite façade. De plus, la forme du nez de garniture peut être de forme arrondie afin de ne pas créer d'arête saillante pouvant blessée en cas de choc.

Dans un mode de réalisation particulier de l'invention, l'angle est supérieur ou égal à cinq degrés, de préférence supérieur à neuf degrés.

Ainsi avantageusement, même lorsque le véhicule n'est pas parfaitement disposé à l'horizontal, l'eau ne coule pas jusqu'à la façade.

Dans un mode de réalisation particulier de l'invention, le nez de garniture forme un rayon de courbure à sa jonction avec le segment amont supérieur ou égal à 3 mm.

Ainsi avantageusement, le nez de garniture ne forme pas d'arête saillante, réduisant les risques de blessure en cas de choc brutale contre la zone située entre le nez de garniture et la façade.

Dans un autre mode de réalisation de l'invention, la paroi de liaison comporte un segment aval entre le segment amont et la façade, disposé plus bas que le segment amont, relié audit segment amont par une marche, le segment aval étant de préférence avec un angle supérieur ou égal à zéro par rapport à un plan horizontal, et orienté vers le bas du véhicule en direction opposé au segment amont.

Ainsi avantageusement, le segment aval permet de créer une liaison entre le segment amont et la façade, et de réduire la dimension suivant l'axe longitudinal du véhicule du segment amont, facilitant la fabrication de la garniture.

Dans un autre mode de réalisation de l'invention, la façade de la garniture de planche de bord forme une première façade, et ladite garniture de planche de bord comporte une deuxième façade avec une deuxième zone de fixation d'un équipement électrique, disposée sous la première façade suivant l'axe verticale, en retrait par rapport à ladite première façade suivant l'axe longitudinal.

Dans un autre mode de réalisation de l'invention, la paroi de liaison forme une première paroi de liaison et le segment amont forme un premier segment amont, et la garniture comporte une deuxième paroi de liaison reliant la première façade à la deuxième façade, ladite deuxième paroi de liaison comportant un deuxième segment amont s'étendant sur la largeur de la deuxième zone de fixation suivant l'axe transversale du véhicule relié à la première façade et formant un angle non nulle par rapport à un plan horizontal parallèle aux axes longitudinal et transversal du véhicule, orienté vers le haut du véhicule, de sorte que le bord du deuxième segment amont lié à la première façade est situé plus bas que le bord du deuxième segment amont opposé à ladite première façade.

Ainsi avantageusement, la deuxième façade est elle-aussi protégé d'un écoulement d'eau, évitant que les équipements électriques installés sur la deuxième zone de fixation ne soient dégradés par l'eau.

Dans un autre mode de réalisation de l'invention, l'angle est supérieur ou égal à cinq degrés, de préférence supérieur à neuf degrés.

Dans un autre mode de réalisation de l'invention, la première façade forme un rayon de courbure à sa jonction avec le deuxième segment amont supérieur ou égale à 3 mm.

Dans un autre mode de réalisation de l'invention, la deuxième paroi de liaison comporte un deuxième segment aval entre le deuxième segment amont et la deuxième façade, sensiblement horizontal et disposé plus bas que le deuxième segment amont, relié audit deuxième segment amont par une marche.

Dans un autre mode de réalisation de l'invention, le véhicule comporte un ou des équipements électriques dans la ou les zones de fixation, de préférence le ou les équipements électriques étant un bouton de commande électrique et/ou une prise de connexion ou de recharge pour un appareil électrique.

L'invention sera mieux comprise à la lecture de la description qui va suivre, donnée uniquement à titre d'exemple et faite en se référant aux dessins annexés, sur lesquels :
[Fig.1] représente une vue en perspective d'une planche de bord d'un véhicule suivant l'invention comportant une garniture de planche de bord.
[Fig.2] représente une vue en perspective du dessous de la garniture de la figure 1.
[Fig.3] représente une vue en coupe suivant un plan P longitudinal et vertical au véhicule de la garniture de la figure 2.

Les dessins sont des représentations schématiques pour faciliter la compréhension de l'invention. Les composants ne sont pas forcément représentés à l'échelle. Les mêmes références correspondent aux mêmes composants d'une figure à l'autre.

L'axe X représente la direction longitudinale du véhicule, l'axe Y la direction transversale et l'axe Z la direction verticale, lorsque le véhicule est placé sur une surface plane horizontale. Les directions avant, arrière, haut, bas sont prises dans le référentiel du véhicule.

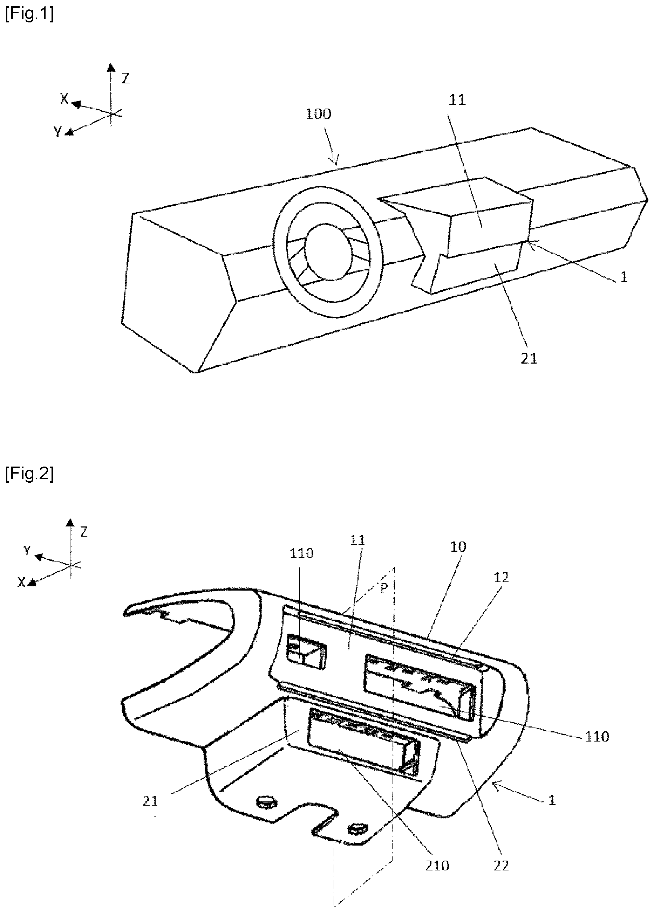

La figure 1 illustre une planche de bord 100 d'un véhicule suivant l'invention. La planche de bord 100 comporte une garniture 1, représentée dans la figure 1 au centre de la planche de bord 100. En variante, cette garniture 1 est disposée à d'autres endroits de la planche de bord 100. La garniture 1 illustrée dans les figures comporte une première façade 11 et une deuxième façade 12, recevant chacune un ou plusieurs équipements électriques 2, 3, tels que des boutons électriques de commande et/ou une ou plusieurs prises de recharge ou de connexion d'appareil électrique, tels que des téléphones portables. Les prises de recharge sont par exemple des prises de type « USB », sigle anglais pour Universal Serial Bus, se traduisant par « bus série universel ». La deuxième façade 21 est disposée sous la première façade 11, c'est-à-dire plus bas suivant un axe vertical Z, et en retrait par rapport à ladite première façade 11.

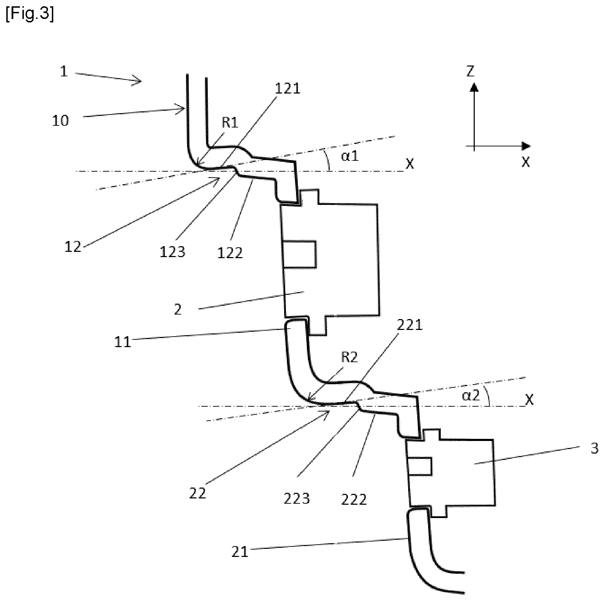

Comme illustré en figure 2 et 3, la première façade 11 s'étend principalement dans un plan parallèle à un axe transversal Y et vertical Z au véhicule. La première façade 11 comprend une première zone de fixation 110 d'un équipement électrique 2. La garniture 1 comporte un nez de garniture 10 surplombant la première façade 11 verticalement, la première façade 11 étant en retrait par rapport audit nez de garniture 10 suivant un axe longitudinal X au véhicule. C'est-à-dire que le nez de garniture 10 est au-dessus de la première façade 11, en saillie par rapport à la première façade 11. Autrement dit, en se plaçant dans le référentiel du véhicule, le nez de garniture 10 est davantage vers l'arrière du véhicule que la première façade 11, avec la première façade 11 disposée vers l'habitacle du véhicule sur une planche de bord disposée classiquement à l'avant de l'habitacle dudit véhicule. Une première paroi de liaison 12 relie le nez de garniture 10 à la première façade 11.

La première paroi de liaison 12 comporte un premier segment amont 121 s'étendant sur la largeur de la première zone de fixation 110, c'est-à-dire suivant l'axe transversale Y du véhicule, à l'aplomb de la première zone de fixation 110. Le premier segment amont 121 est relié au nez de garniture 10 et forme un premier angle α1 non nulle par rapport à un plan horizontal parallèle aux axes longitudinal X et transversal Y du véhicule, ce premier angle α1 étant orienté vers le haut du véhicule. L'angle α1 est dans un plan parallèle aux axes longitudinal X et vertical Z. C'est-à-dire que le bord du premier segment amont 121 lié au nez de garniture 10 est situé plus bas que le bord dudit premier segment 121 opposé audit nez de garniture 10. Le premier segment amont 121 s'étend au dessus de la première façade 11, au moins sur la même largeur que la zone de fixation 110. L'angle α1 est par exemple supérieur ou égal à cinq degrés, ou encore à neuf degrés.

Le nez de garniture 10 forme un rayon de courbure R1 à sa jonction avec le premier segment amont 121 supérieur ou égal à 3 mm. C'est-à-dire que la jonction entre la première paroi de liaison 12 et le nez de garniture 10 ne forme pas une arête saillante mais un bord arrondi avec le rayon de courbure R1 s'étendant sur au moins sur la largeur de la première façade 11.

La première paroi de liaison 12 comporte un premier segment aval 122 entre le premier segment amont 121 et la première façade 11, disposé plus bas que le premier segment amont 121. Le premier segment aval 122 est relié au premier segment amont par une marche 123. Le premier segment aval 122 forme par exemple un angle supérieur ou égal à zéro par rapport à un plan horizontal, et orienté vers le bas du véhicule en direction opposé au segment amont 121, c'est-à-dire en direction de la première façade 11, comme illustré en figure 3.

La deuxième façade 21 comporte une deuxième zone de fixation 210 apte à recevoir un autre équipement électrique 3. La deuxième façade 21, disposée sous la première façade 11 suivant l'axe verticale Z, est en retrait par rapport à ladite première façade 11 suivant l'axe longitudinal X. De manière similaire à la liaison entre la première façade 11 et le nez de garniture 10, une deuxième paroi de liaison 22 relie la deuxième façade 21 à la première façade 11. Cette deuxième paroi de liaison 22 est de forme similaire à la première paroi de liaison 12. La deuxième paroi de liaison 22 comporte ainsi un deuxième segment amont 221 s'étendant au moins sur la largeur de la deuxième zone de fixation 210 suivant l'axe transversale Y. Le deuxième segment amont 221 est relié à la première façade 11, et forme un deuxième angle α2 non nulle par rapport à un plan horizontal parallèle aux axes longitudinal X et transversal Y du véhicule, orienté vers le haut du véhicule. Le deuxième angle α2 est dans un plan parallèle aux axes vertical Z et longitudinal X. Autrement dit, le bord du deuxième segment amont 221 lié à la première façade 11 est situé plus bas que le bord dudit deuxième segment amont 221 opposé à ladite première façade 11. Le deuxième angle α2 est par exemple supérieur ou égal à trois degrés, ou encore à cinq degrés.

La première façade 11 forme un rayon de courbure R2 à sa jonction avec le deuxième segment amont 221 supérieur ou égale à 3 mm. C'est-à-dire que la jonction entre la deuxième paroi de liaison 22 et la première façade 11 ne forme pas une arête saillante mais un bord arrondi suivant un rayon de courbure R2 s'étendant au moins sur la largeur de la deuxième façade 21.

La deuxième paroi de liaison 22 comporte un deuxième segment aval 222 entre le deuxième segment amont 221 et la deuxième façade 21, disposé plus bas que le deuxième segment amont 221, relié audit deuxième segment amont 221 par une marche 223. Le deuxième segment aval 222 est sensiblement horizontal ou en biais vers le bas, c'est-à-dire formant un angle supérieur ou égal à zéro par rapport à un plan horizontal, et orienté vers le bas du véhicule en direction opposé au deuxième segment amont 221, c'est-à-dire en direction de la deuxième façade 21, comme illustré en figure 3.

En variante non illustré, la garniture 1 ne comporte qu'une seule façade 11 disposée sous le nez de garniture 10. La garniture 1 est par exemple une garniture fixée sur la planche de bord 100, ou en variante une garniture formant une partie majoritaire de la surface extérieure d'une planche de bord, ou en autre variante une garniture d'une zone particulière de la planche de bord, par exemple une garniture d'une platine en saillie permettant la fixation d'un appareil nomade et/ou l'installation de boutons de commande accessibles à un conducteur ou un passager.

Le véhicule est par exemple un véhicule cabriolet, ou comportant un toit ouvrant, ou encore un véhicule sans porte, ou encore un véhicule sans toit.

## Revendications

1. Véhicule comportant une garniture (1) de planche de bord comportant une façade (11) s'étendant principalement dans un plan parallèle à un axe transversal (Y) et vertical (Z) au véhicule, comprenant zone de fixation (110) d'un équipement électrique (2), un nez de garniture (10) surplombant ladite façade (11) verticalement, la façade (11) étant en retrait par rapport au nez de garniture (10) suivant un axe longitudinal (X) au véhicule, une paroi de liaison (12) reliant le nez de garniture (10) à la façade (11), **caractérisé en ce que** la paroi de liaison (12) comporte un segment amont (121) s'étendant sur la largeur suivant l'axe transversale (Y) du véhicule de la zone de fixation (110), relié au nez de garniture (10), et formant un angle (α1) non nul par rapport à un plan horizontal parallèle aux axes longitudinal (X) et transversal (Y) du véhicule, orienté vers le haut du véhicule, de sorte que le bord du segment amont (121) lié au nez de garniture (10) est situé plus bas que le bord du segment amont (121) opposé audit nez de garniture (10).

2. Véhicule suivant la revendication précédente, dont la paroi de liaison (12) comporte un segment aval (122) entre le segment amont (121) et la façade (11), disposé plus bas que le segment amont (121), relié audit segment amont par une marche (123), le segment aval (122) étant de préférence avec un angle supérieur ou égal à zéro par rapport à un plan horizontal, et orienté vers le bas du véhicule en direction opposé au segment amont (121).

3. Véhicule suivant l'une revendication précédente, dont l'angle (α1) entre le segment amont (121) et un plan horizontal parallèle aux axes longitudinal X et transversal Y du véhicule est supérieur ou égal à cinq degrés, ou supérieur ou égal à neuf degrés.

4. Véhicule suivant l'une des revendications précédentes, dont le nez de garniture (10) forme un rayon de courbure (R1) à sa jonction avec le segment amont (121) supérieur ou égal à trois millimètres.

5. Véhicule suivant l'une des revendications précédentes, dont la façade (11) de la garniture (1) de planche de bord forme une première façade (11), et ladite garniture (1) de planche de bord comporte une deuxième façade (21) avec une deuxième zone de fixation (210) d'un équipement électrique (3), disposée sous la première façade (11) suivant l'axe vertical (Z), en retrait par rapport à ladite première façade (11) suivant l'axe longitudinal (X).

6. Véhicule suivant la revendication précédente, dont la paroi de liaison (12) forme une première paroi de liaison (12) et le segment amont (121) forme un premier segment amont (121), et la garniture (1) comporte une deuxième paroi de liaison (22) reliant la première façade (11) à la deuxième façade (21), ladite deuxième paroi de liaison (22) comportant un deuxième segment amont (221) s'étendant sur la largeur de la deuxième zone de fixation (210) suivant l'axe transversale (Y) du véhicule relié à la première façade (11) et formant un angle (α2) non nul par rapport à un plan horizontal parallèle aux axes longitudinal (X) et transversal (Y) du véhicule, orienté vers le haut du véhicule, de sorte que le bord du deuxième segment amont (221) lié à la première façade (11) est situé plus bas que le bord du deuxième segment amont (221) opposé à ladite première façade (11).

7. Véhicule suivant la revendication précédente, dont la deuxième paroi de liaison (22) comporte un deuxième segment aval (222) entre le deuxième segment amont (221) et la deuxième façade (21), sensiblement horizontal et disposé plus bas que le deuxième segment amont (221), relié audit deuxième segment amont par une marche (223).

8. Véhicule suivant l'une des revendications de 6 à 7, dont l'angle (α2) entre le deuxième segment amont (221) et un plan horizontal parallèle aux axes longitudinal X et transversal Y du véhicule est supérieur ou égal à cinq degrés.

9. Véhicule suivant l'une des revendications de 6 à 8, dont la première façade (11) forme un rayon de courbure (R2) à sa jonction avec le deuxième segment amont (221) supérieur ou égal à trois millimètres.

10. Véhicule suivant l'une des revendications précédentes, comportant un ou des équipements électriques dans la ou les zones de fixation (110, 210), de préférence le ou les équipements électriques étant un bouton de commande électrique et/ou une prise de connexion ou de recharge pour un appareil électrique.

## Patentansprüche

1. Fahrzeug mit einer Armaturenbrettauflage (1), die eine Fassade (11) aufweist, die sich hauptsächlich in einer Ebene parallel zu einer Querachse (Y) und vertikal (Z) zum Fahrzeug erstreckt, mit einem Befestigungsbereich (110) einer elektrischen Einrichtung (2), einer die Fassade (11) vertikal überragenden Auskleidungsnase (10), wobei die Fassade (11) in Bezug auf die Auskleidungsnase (10) entlang einer Längsachse (X) zum Fahrzeug zurückgesetzt ist, wobei eine Verbindungswand (12) die Nase verbindet Verkleidung (10) an der Fassade (11), **dadurch gekennzeichnet, dass** die Verbindungswand (12) einen sich über die Breite entlang der Fahrzeugquerachse (Y) des Befestigungsbereiches (110) erstreckenden, mit der Verkleidungsnase (10) verbundenen, mit einer zur Fahrzeuglängsachse (X) und zur Fahrzeuglängsachse (Y) parallelen horizontalen Ebene nicht Null winkligen, nach oben gerichteten vorderen Abschnitt (121) aufweist, sodass der mit der Verkleidungsnase (10) verbundene Rand des vorderen Abschnitts (121) tiefer als der der Belagnase (10) gegenüberliegende Rand des stromaufwärtigen Segments (121) ist.

2. Fahrzeug nach dem vorhergehenden Anspruch, bei dem die Verbindungswand (12) einen stromabwärtigen Abschnitt (122) zwischen dem stromaufwärtigen Abschnitt (121) und der Fassade (11) aufweist, der tiefer als der stromaufwärtige Abschnitt (121) angeordnet ist, der mit dem stromaufwärtigen Abschnitt durch eine Stufe (123) verbunden ist, wobei der stromabwärtige Abschnitt (122) vorzugsweise mit einem Winkel größer oder gleich Null in Bezug auf eine horizontale Ebene angeordnet ist und in Richtung des stromaufwärtigen Abschnitts (121) nach unten gerichtet ist.

3. Fahrzeug nach einem der vorhergehenden Ansprüche, bei dem der Winkel (α1) zwischen dem stromaufwärtigen Segment (121) und einer horizontalen Ebene parallel zu der Fahrzeuglängsachse X und der Querachse Y größer oder gleich fünf Grad oder größer oder gleich neun Grad ist.

4. Fahrzeug nach einem der vorhergehenden Ansprüche, bei dem die Verkleidungsnase (10) an ihrer Verbindung mit dem vorderen Abschnitt (121) einen Krümmungsradius (R1) von mindestens drei Millimetern bildet.

5. Fahrzeug nach einem der vorhergehenden Ansprüche, bei dem die Vorderseite (11) der Armaturenbrettauflage (1) eine erste Vorderseite (11) bildet und die Armaturenbrettauflage (1) eine zweite Vorderseite (21) mit einem zweiten Befestigungsbereich (210) einer elektrischen Einrichtung (3) aufweist, der unter der ersten Vorderseite (11) in der vertikalen Achse (Z) angeordnet ist und in Bezug auf die erste Vorderseite (11) in der Längsachse (X) zurückversetzt ist.

6. Fahrzeug nach dem vorhergehenden Anspruch, dessen Verbindungswand (12) eine erste Verbindungswand (12) bildet und dessen stromaufwärtiges Segment (121) ein erstes stromaufwärtiges Segment (121) bildet, und dessen Dichtung (1) eine zweite Verbindungswand (22) aufweist, die die erste Fassade (11) mit der zweiten Fassade (21) verbindet, wobei die zweite Verbindungswand (22) ein zweites stromaufwärtiges Segment (221) aufweist, das sich entlang der Breite des zweiten Befestigungsbereichs (210) entlang der Querachse erstreckt (Y) des Fahrzeugs, das mit der ersten Fassade (11) verbunden ist und einen Winkel (α2) ungleich null zu einer horizontalen Ebene bildet, die parallel zu der Fahrzeuglängsachse (X) und zur Fahrzeuglängsachse (Y) verläuft und nach oben gerichtet ist, sodass der mit der ersten Fassade (11) verbundene Rand des zweiten vorderen Abschnitts (221) niedriger liegt als der der ersten Fassade (11) gegenüberliegende Rand des zweiten vorderen Abschnitts (221).

7. Fahrzeug nach dem vorhergehenden Anspruch, bei dem die zweite Verbindungswand (22) einen zweiten stromabwärtigen Abschnitt (222) zwischen dem zweiten stromaufwärtigen Abschnitt (221) und der zweiten Fassade (21) aufweist, der im Wesentlichen horizontal und niedriger als der zweite stromaufwärtige Abschnitt (221) angeordnet ist, der mit dem zweiten stromaufwärtigen Abschnitt durch eine Stufe (223) verbunden ist.

8. Fahrzeug nach einem der Ansprüche 6 bis 7, bei dem der Winkel (α2) zwischen dem zweiten stromaufwärtigen Segment (221) und einer horizontalen Ebene parallel zu der Längsachse X und der Querachse Y des Fahrzeugs größer oder gleich fünf Grad ist.

9. Fahrzeug nach einem der Ansprüche 6 bis 8, dessen erste Fassade (11) an ihrer Verbindung mit dem zweiten stromaufwärtigen Segment (221) einen Krümmungsradius (R2) von mindestens drei Millimetern bildet.

10. Fahrzeug nach einem der vorhergehenden Ansprüche, mit einer oder mehreren elektrischen Einrichtungen in dem oder den Befestigungsbereichen (110, 210), wobei vorzugsweise die eine oder mehreren elektrischen Einrichtungen ein elektrischer Steuerknopf und/oder ein Anschluss- oder Aufladeanschluss für ein elektrisches Gerät sind.

## Claims

1. Vehicle comprising a dashboard trim (1) comprising a front panel (11) extending mainly in a drawing parallel to a transverse axis (Y) and vertical axis (Z) to the vehicle, comprising a zone (110) for fastening electrical equipment (2), a trim nose (10) vertically overhanging said front panel (11), the front panel (11) being set back by report from the trim nose (10) along a longitudinal axis (X) to the vehicle, a connecting wall (12) connecting the trim nose (10) to the front panel (11), wherein the connecting wall (12) comprises an upstream section (121) extending across the transverse axis (Y) of the fastening zone) (110), connected to the trim nose (10), and forming a non-zero angle (α1) by report to a horizontal drawing parallel to the longitudinal (X) and transverse (Y) axes of the conveyance, orientated upwards, such that the edge of the section upstream (121) connected to the trim nose (10) is located lower than the edge of the section upstream (121) opposite said trim nose (10).

2. Vehicle according to the previous claim, the connecting wall (12) of which comprises a downstream section (122) between the upstream section (121) and the facade (11), arranged lower than the upstream section (121), connected to said upstream section by a step (123), the section downstream (122) preferably being at an angle greater than or equal to zero by report to a horizontal drawing, and orientated downwards of the vehicle in management opposite to the section upstream (121).

3. Vehicle according to a previous claim, the angle (α1) of which between the upstream section (121) and a horizontal drawing parallel to the longitudinal axis X and transverse axis Y of the vehicle is greater than or equal to five degrees, or greater than or equal to nine degrees.

4. Vehicle according to one of the previous claims, the lining nose (10) of which has a radius of curvature (R1) at its junction with the upstream section (121) greater than or equal to three millimetres.

5. Vehicle according to one of the previous claims, in which the front (11) of the dashboard trim (1) forms a first front (11), and said dashboard trim (1) comprises a second front (21) with a second fastening zone (210) for fastening electrical equipment (3), arranged under the first front (11) along the vertical axis (Z), set back by report from said first front (11) along the longitudinal axis (X).

6. Vehicle according to claim 1, the connecting wall (12) of which forms a first connecting wall (12) and the upstream section (121) of which forms a first upstream section (121), and the lining (1) of which comprises a second connecting wall (22) connecting the first front panel (11) to the second front panel (21), said second connecting wall (22) comprising a second upstream section (221) extending across the width of the second fastening zone (210) along the transverse axis (Y) of the previous connected to the first front panel (11) and forming a non-zero angle (α2) by report to a horizontal drawing parallel to the longitudinal (X) and transverse (Y) axes of the vehicle, orientated upwards The section upstream (221) connected to the first facade (11) is located lower than the edge of the second section upstream (221) opposite said first facade (11).

7. Vehicle according to the previous claim, the second connecting wall (22) of which comprises a second downstream section (222) between the second upstream section (221) and the second facade (21), substantially horizontal and arranged lower than the second upstream section (221), connected to said second upstream section by a step (223).

8. Vehicle according to one of Claims 6 to 7, the angle (α2) of which between the second upstream section (221) and a horizontal drawing parallel to the longitudinal X and transverse Y axes of the vehicle is greater than or equal to five degrees.

9. Vehicle according to one of Claims 6 to 8, the first facade (11) of which has a radius of curvature (R2) at its junction with the second upstream section (221) greater than or equal to three millimetres.

10. Vehicle according to one of the previous claims, comprising one or more pieces of electrical equipment in the fastening zone(s) (110, 210), preferably the piece of electrical equipment being an electrical control button and/or a connection or recharging socket for an electrical appliance.
